# EUROPEAN PATENT APPLICATION

(11) **EP 2 134 081 A1**
(43) Date of publication of application: **16.12.2009**
(21) Application number: 07713576.2
(22) Date of filing: 09.03.2007
(51) Int. Cl.: H04N 5/262, G11B 27/034, H04N 5/91, H04R 3/00

(54) **EFFECT DEVICE, AV PROCESSING DEVICE AND PROGRAM**

(71) Applicant: Pioneer Corporation, Tokyo 153-8654 (JP)
(72) Inventor: NISHIKAWA, Yasumasa, Tokorozawa-shi Saitama 359-8522 (JP); TAKAHASHI, Shinji, Tokorozawa-shi Saitama 359-8522 (JP); KOIZUMI, Shinya, Tokorozawa-shi Saitama 359-8522 (JP); MIYAKURA, Takeo, Tokorozawa-shi Saitama 359-8522 (JP); AJIKI, Sumie, Tokorozawa-shi Saitama 359-8522 (JP)
(74) Representative: Haley, Stephen
(86) International application number: PCT/JP2007/000194
(87) International publication number: WO 2008/111113

(57) **Abstract**

Provided herein is an AV processing apparatus applied with an effect apparatus of the invention stores a plurality of video control programs for implementing a plurality types of video effects corresponding to a plurality types of audio effects to provide the same impression as each audio effect can give. The AV processing apparatus implements a video control program corresponding to a selected audio effect from the plurality types of video effects, thereby a video effect which can provide the same impression as the audio effect can give is achieved.

## Description

### TECHNICAL FIELD

The present invention relates to an effect apparatus which applies effects to videos or sounds, an AV processing apparatus and a program therefor.

### BACKGROUND ART

In recent years, there has been known an effect apparatus which simultaneously applies effects to videos and music based on an input two-dimensional coordinate value (for example, Patent Document 1). The effect apparatus described in the Patent Document 1 can perform video effects (video image effects) and audio effects (music effects) by an easy operation such that a user designates an arbitrary position on an operation panel with a stick. By pressing a corresponding button, types of the video effect and the audio effect can be designated.
[Patent Document 1] JP-A-2002-328768

### DISCLOSURE OF THE INVENTION

### [Problems to be Solved]

There has been known VJ equipment (used by visual jockeys or video jockeys (VJs) for video performance) for displaying videos on a monitor in a club or the like as equipment applying effects to the videos. Also, there has been known DJ equipment (used by disc jockeys (DJs) for audio performance) in the club or the like as equipment applying effects to music.

VJs and DJs generally perform separately under the present circumstances. Most of them specialize in performance of either music or videos. Since each has a specialized field, it is difficult for them to mix objects beyond their specialized fields. Therefore, usability of such an apparatus which applies effects to videos and music simultaneously as described above may be greatly changed based on a structure by which field can be treated. In other words, when an effect type is selected, it is not easy for VJs specializing in videos to recognize what kind of effects can be obtained even if audio effect names are shown on respective buttons as selection candidates. On the other hand, it is not easy for DJs specializing in music to recognize what kind of effects can be obtained even if video effect names are shown on respective buttons as selection candidates. Therefore, even in a case that the apparatus can apply effects to videos and music simultaneously, it is not easy to perform the video effects by the DJs having a specialized field in music and to perform the audio effects by the VJs having a specialized field in videos. Further, it is conceivable that a video effect name is shown together with an audio effect name on a button, but it arises problems such as a notation space and such that it is not necessarily true that there is the other effect corresponding to one effect.

An advantage of the invention is to provide an effect apparatus which enables users having a specialized field in music to easily perform video effects and which enables users having a specialized field in videos to easily perform audio effects, an AV processing apparatus and a program therefor.

### [Means to Solve the Problems]

The invention provides an effect apparatus having: a memory unit that stores a plurality of video control programs for performing a plurality types of video effects which can provide a same impression as each audio effect can provide in correspondence to a plurality types of audio effects; an effect selection unit that selects one or more audio effects from the plurality types of audio effects; and a video control unit that performs the video effect which can provide the same impression as the audio effect can give by implementing the video control program corresponding to a selected audio effect.

According to this configuration, it is possible to achieve a video effect which can provide the same impression as an audio effect can give by selecting the audio effect having an image similar to that of desired video effect. Accordingly, even users such as DJs who are not familiar with a video field can easily perform a desired video effect.

In the effect apparatus described above, it is preferable that the video control program be reflected with a time change coefficient of the corresponding audio effect.

According to this configuration, it is possible to reflect a time change of the audio effect varying with time to the video effect. Therefore, various video effects can be performed by storing a plurality of video control programs having different time change coefficients.

In the effect apparatus described above, it is preferable that the memory unit store a plurality of audio control programs that perform the plurality types of audio effects, and the apparatus further have an audio control unit that performs an audio effect by implementing the audio control program of the selected audio effect in conjunction with the video control program implemented by the video control unit.

According to this configuration, it is possible to perform an audio effect and a video effect which can provide the same impression as the audio effect can give simultaneously by selecting the audio effect. In other words, it is possible to apply effects having same images to videos and music by an easy operation such that an audio effect is only selected.

In the effect apparatus described above, it is preferable that the effect apparatus further have a display unit that displays an operation screen used for designating a parameter of the audio effect on a touch panel having a display function and an operation detection unit that detects an operation on the touch panel having the display function. It is also preferable that the video control unit and the audio control unit reflect a parameter corresponding to a detected position by the operation detection unit to perform the video effect and the audio effect, respectively, and a control result of the video control unit be reflected to the display unit.

According to this configuration, as an operation screen used for designating the parameter of the audio effect is displayed on the touch panel having the display function, intuitive operations can be expected. Further, as a parameter reflected to both the video effect and the audio effect is determined based on a detected position by the operation detection unit, a user can designate the parameter by an operation position. As a parameter can be changed by an easy operation with only moving an operation position, various video expressions and musical expressions can be achieved with an instantaneous judgment. Still further, as the control result of the video control unit is displayed on the display unit, the user can surely confirm that the user's operation is reflected to the control result.

In the effect apparatus described above, it is preferable that the audio effect be applied to an original sound and the video effect be applied to an original image, and the apparatus further have a mixing rate adjustment unit that adjusts a mixing rate of the original sound and the audio effect. It is also preferable that the video control unit and the audio control unit reflect the mixing rate to perform the video effect and the audio effect, respectively.

According to this configuration, it is possible to adjust the mixing rate of the original sound and the audio effect. Further, as the adjusted result is reflected to the mixing rate of an original image and the video effect, it is possible to perform a variety of video expressions and musical expressions while the user maintains the same impression between the video effect and the audio effect.

In the effect apparatus described above, it is preferable that the effect apparatus further have a BPM detection unit that detects a BPM value of an original sound applied with the audio effect. It is also preferable that the video control unit and the audio control unit reflect a BPM coefficient based on the BPM value detected by the BPM detection unit to perform the video effect and the audio effect, respectively.

According to this configuration, as the BPM value of the original sound is detected and the BPM coefficient based on the BPM value is reflected to the video effect and the audio effect, it is possible to perform a video effect and a music effect as if they are linked to each other.

In the effect apparatus described above, it is preferable that a type of the audio effect include a "filter", and the video control program corresponding to the "filter" apply a gradation effect in at least a part of an original image.

According to this configuration, it is possible to achieve a video effect which can provide the same impression as the "filter" can give by selecting the "filter" as audio effect which changes the sound fuzzy.

In the effect apparatus described above, it is preferable that a type of the audio effect include a "flanger", and the video control program corresponding to the "flanger" apply an effect such that an arbitrary image is passing from a back to a front in at least a part of an original image.

According to this configuration, it is possible to perform a video effect which can provide the same impression as the "flanger" can give by selecting the "flanger" as audio effect which generates a sound such as a jet airplane.

In the effect apparatus described above, it is preferable that a type of the audio effect include a "phaser", and the video control program corresponding to the "phaser" synthesize an original image and an image of a fedback image which is rotated according to a rate in conjunction with a BPM value of the audio effect.

According to this configuration, it is possible to perform a video effect which can provide the same impression as the "phaser" can give by selecting the "phaser" as audio effect which generates a phase-shifted sound.

In the effect apparatus described above, it is preferable that a type of the audio effect include a "reverb", the video control program corresponding to the "reverb" store a video in a plurality of buffers, generate a reverberant impression by enlarging the video sequentially read out from the plurality of buffers, and after mixing an enlarged image and the original image, an mixed image and the video read out from the plurality of buffers be mixed, thereby an incidental image impression be generated.

According to this configuration, it is possible to perform a video effect which can provide the same impression as the "reverb" can give by selecting the "reverb" as audio effect which generates a reverberant sound.

In the effect apparatus described above, it is preferable that a type of the audio effect include a "crush", and the video control program corresponding to the "crush" elongate a pixel corresponding to a particular portion in opposite directions with the particular portion of a video as a center.

According to this configuration, it is possible to perform a video effect which can provide the same impression as the "crush" can give by selecting the "crush" as audio effect which generates a noise sound.

The invention provides another effect apparatus having: a memory unit that stores a plurality of audio control programs for performing a plurality types of audio effects which can provide a same impression as each video effect can give in correspondence to a plurality types of video effects, an effect selection unit that selects one or more video effects from the plurality types of video effects, and an audio control unit that performs the audio effect which can provide the same impression as the video effect can give by implementing the audio control program corresponding to a selected video effect.

According to this configuration, it is possible to perform an audio effect which can provide the same impression as a video effect can give by selecting the video effect having an image similar to that of a desired audio effect. In other words, users such as DJs who are not familiar with a video field can easily perform a desired audio effect.
The "audio" in each unit of the above effect apparatus can be read as the "video", and vice versa.

An AV apparatus processing apparatus of the invention has: each unit of the effect apparatus described above; an input unit used for inputting a video signal; and an output unit that outputs a video applied with the video effect implemented by the video control unit to an original image based on an input video signal.

According to this configuration, users having a specialized field in music can easily perform a desired video effect to the input video signal, and it is possible to provide an AV processing apparatus capable of outputting a video applied with the video effect.

Another AV apparatus processing apparatus of the invention has: each unit of the effect apparatus as described above; an input unit used for inputting an audio signal; and an output unit that outputs music applied with the audio effect implemented by the audio control unit to an original sound based on an input audio signal.

According to this configuration, users having a specialized field in video can easily perform a desired audio effect to the input audio signal, and it is possible to provide an AV processing apparatus capable of outputting music applied with the audio effect.

A program of the invention causes a computer to function as each unit of the effect apparatus described above.

It is possible to provide an effect apparatus with which users having a specialized field in music can easily perform video effects or users having a specialized field in videos can easily perform audio effects by implementing the program.

### BRIEF DESCRIPTION OF THE DRAWINGS

FIG. 1A shows a system structure of an AV processing system according to one embodiment of the invention and FIG. 1B shows a simplified structure of the AV processing apparatus.
FIG. 2 shows a user interface provided on the AV processing apparatus.
FIG. 3 is a block diagram of the AV processing apparatus.
FIG. 4 shows one example of a program list.
FIG. 5 shows one example of a method for changing parameters of a video effect.
FIGs. 6A and 6B show other display examples of an operation screen.

### [Reference Numerals]

- 10: CD player
- 20: DVD player
- 30: AV processing apparatus
- 31: CPU
- 32: display control unit
- 33: effect processing unit
- 34: output signal selection unit
- 40: speaker
- 50: monitor
- 61: audio effect name
- 63: knob
- 81-83: ripple
- A1: edit result display area
- A2: GUI display area
- A3: operation area
- BT1-BT3: operation button
- D: operation screen
- SY: AV processing system
- TP: touch panel

### BEST MODES FOR CARRYING OUT THE INVENTION

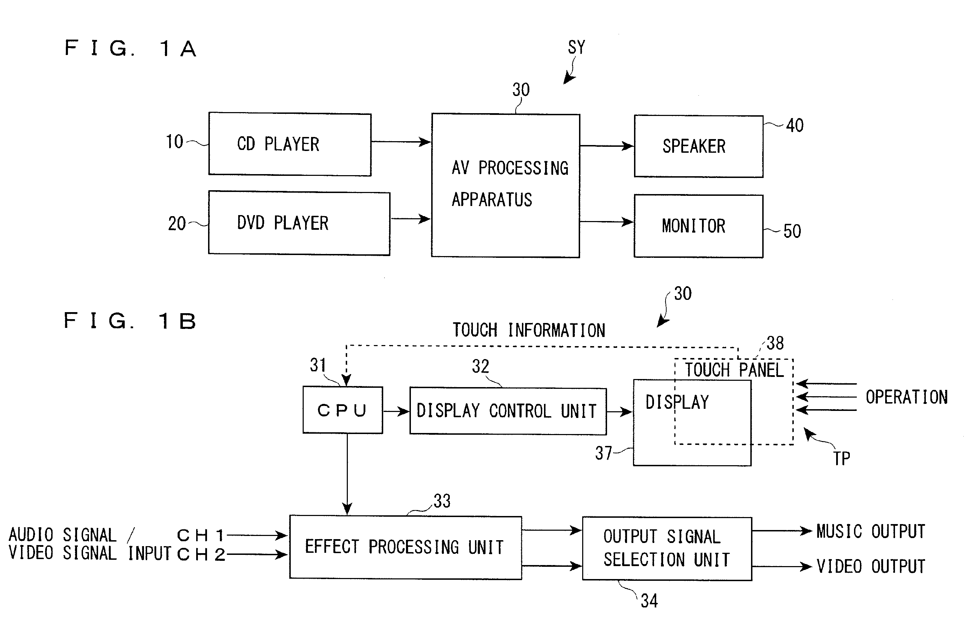

An effect apparatus, an AV processing apparatus, and a program according to an embodiment of the invention will be explained with reference to accompanying drawings. FIG. 1A shows a system diagram of an AV processing system SY applied with an AV processing apparatus 30 of the invention. The AV processing system SY has: one or more CD players 10 (only one is shown in the figure) which generate one or more audio signals to be input to the AV processing apparatus 30; one or more DVD players 20 (only one is shown in the figure) which generate one or more video signals to be input to the AV processing apparatus 30; the AV processing apparatus 30 to which one or more audio signals and/or video signals (the audio signals and/or the video signals are refereed to as "AV signals" hereinafter) are input from these one or more CD players 10 and/or DVD players 20 and which generates output AV signals by editing the above signals; a speaker 40 which outputs the audio signals output from the AV processing apparatus 30; and a monitor 50 which displays the video signals output from the AV processing apparatus 30.

The AV processing apparatus 30 of the embodiment is capable of receiving a plurality of AV signals and performs various edit processes including effect processes which apply effects to these AV signals. One example of the AV processing apparatus 30 is DVJ equipment used in a club or the like (composite equipment of DJ equipment used for audio performance by disc jockeys (DJs) and VJ equipment used for video performance by visual jockeys or video jockeys (VJs)) which is capable of dealing with the audio signals and/or the video signals and which applies effects and the like to both of sounds and videos as if users feel the equipment as an instrument.

VJs and DJs will be explained hereinbelow. VJs mix (synthesize or join) videos in accordance with music extemporaneously. While DJs mix music extemporaneously, VJs perform using videos. VJs perform to switch and output videos on a screen or the like mainly in an event or a club party, and select appropriate videos extemporarily in harmony with music being played in a hall or project progress and show the videos in good timing.

In contrast, DJs select musical compositions depending on the atmosphere of the venue, and play the musical compositions seamlessly. They use, for example, turntables for their performance, with which they can change the pitch (speed) of musical compositions. Performance other than selecting musical compositions, they commonly perform DJ mixing and scratching, for example. During the mixing, they connect the music currently being played and the music to be played next smoothly without any break of sounds to maintain the tension of the floor.

VJs and DJs generally perform separately under the present circumstances. Most of them specialize in performance of either music or videos. Since each has a specialized field, it is difficult for them to mix objects beyond their specialized fields. Even having one object, VJs and DJs are very busy to perform various operations such as joining objects extemporaneously and applying effects. Therefore, they cannot afford to handle both objects.

However, both the performance requires performers to change and output musical compositions and videos depending on the atmosphere in the hall or performers' own feelings. Since sounds and videos need to be provided in harmony with each other, it is desirable for one person to perform both performance. Even VJs who are good at processing videos can handle music easily in addition to videos if music changes as videos change. On the other hand, DJs who are dedicated to acoustic performance can also handle both sounds and videos more naturally if videos change as sounds change.

The AV processor 30 according to this embodiment makes it possible for one person to handle music and videos simultaneously, which has been practically impossible. Simple and comfortable operations are provided to a person who tries to handle both music and videos.

As apparatuses for generating AV signals input to the AV processing apparatus 30, other apparatuses (such as various types of audio equipment, video equipment, and personal computers) can be used, without limited to the CD player 10 or the DVD player 20. Functions of the CD player 10 or the DVD player 20 may be installed in the AV processor 30. Further, the video signals may be for animations or still images. When a plurality of audio signals are input to the AV processor 30, in order to eliminate a discomfort impression in mixed audio signals, it is preferable that a function to coincide BPMs of the plurality of audio signals be installed in either the CD player 10 side or the AV processor 30 side.

FIG. 1B shows a simplified structure diagram of the AV processing apparatus 30 which has a touch panel TP with a display function, a CPU 31, a display control unit 32, an effect processing unit 33 and an output signal selection unit 34 as main structure elements.

The touch panel TP with the display function includes a display 37 having a display element such as a TFT, and a touch panel 38 superposed thereon. As a user can operate the touch panel 38 on display of the display 37 by adopting the touch panel TP having the display function (refereed to as a "touch panel" hereinafter), simple and intuitive operations can be made.

The CPU 31 detects a position and a movement of an operation position according to a voltage change (touch information) based on an operation (touch) on the touch panel TP. Further, the CPU 31 generates display control signals used for display control of the touch panel TP (the display 37) and control signals used for edit processes for the AV signals based on the detected results and outputs the respective signals to the display control unit 32 and the effect processing unit 33. Still further, the CPU 31 is input with a process result of the effect processing unit 33 and outputs the process result to the display control unit 32 so as to reflect it on the touch panel TP. Also, the CPU 31 performs integral controls for the AV processing apparatus 30 such as information management based on user's operations with various operators and input/output of signals from/to external devices.

The display control unit 32 performs display control for the touch panel TP based on the display control signals input from the CPU 31, the process result of the effect processing unit 33 and the like. The effect processing unit 33 is generally refereed to as an effecter, and performs effect processes on the AV signals input from the external devices based on the control signals input from the CPU 31. In the effect process, in a case that the input AV signals include audio signals, a BPM value is detected based on the audio signals and an audio effect is performed in conjunction with the BPM value. Further, in a case that the input AV signals include video signals, a video effect is performed in conjunction with the BPM value in the same manner as described above. The output signal selection unit 34, after receiving the process result from the effect processing unit 33, generates output AV signals, and selects output audio and video signals to output music and videos via respective interfaces.

It is preferable that the output signal selection unit 34 perform a synchronous process to synchronize a plurality of output signals. This avoids video disturbance of the output signals. Further, a double process may be possible in which the outputs from the output signal selection unit 34 are fedback to the effect processing unit 33 and an edit process is performed again on the AV signals which have been already edited.

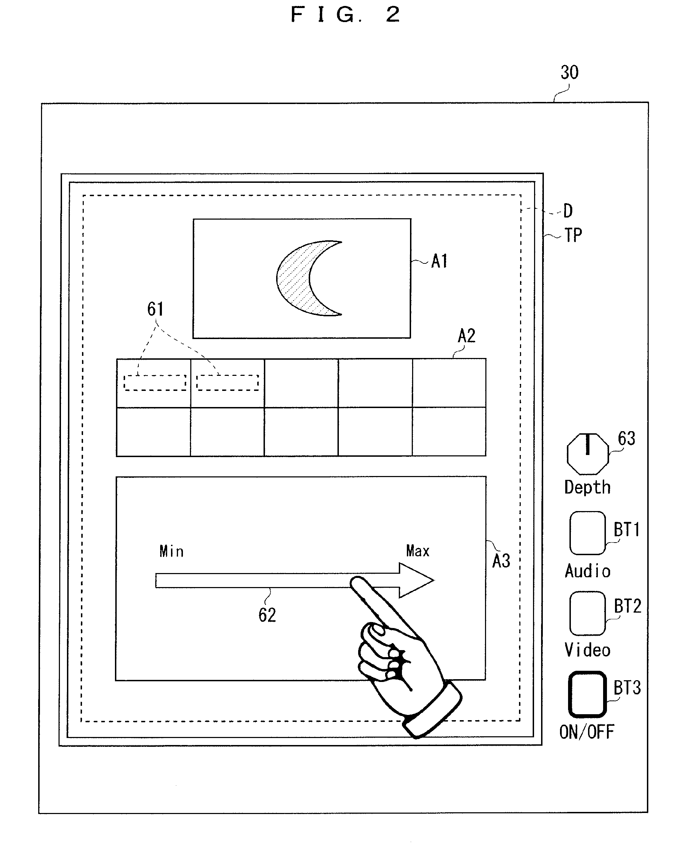

A user interface provided on the AV processing apparatus 30 will be explained with reference to a plan view of FIG. 2. As shown in FIG. 2, the AV processing apparatus 30 has the above described touch panel TP, a knob 63, and three operation buttons BT1, BT2 and BT3 on the top surface thereof. The AV processing apparatus 30 further includes a display (not shown) displaying videos output from the AV processing unit 30 and various operators (not shown) such as faders and knobs which are used for switching and adjusting input AV signals as user interfaces.

The touch panel TP displays an operation screen D including an edit result display area A1 by which the user confirms the edit process results such as the effect process and the like, a GUI display area A2 used for selecting a type of effect (an effect name 61) and the like, and an operation area A3 used for performing various operations such as a parameter designation of the effect and the like. For example, when the user selects an arbitrary selection candidate from a plurality of effect selection candidates displayed on the GUI display area A2, parameter designation display (display for designating a parameter by user) according to the selected candidate is displayed on the operation area A3. The operation area A3 in FIG. 2 shows parameter designation display in which a parameter value (an effect applied rate) increases towards the tip of an arrow 62). When the parameter is designated by the user according to the display, the parameter is reflected to the selected effect. Further, a video (an output image) obtained by applying the effect to the original image (the image based on the input video signal) is displayed on the edit result display area A1.

At the moment, for example, in a case that an audio effect is selected, the audio effect is performed, together with performing a video effect which can provide the same impression as the audio effect can give, and a video applied with the video effect (reflected with the effect) is displayed on the edit result display area A1. Further, when a video effect is selected, a video applied with the video effect is displayed on the edit result display area A1, together with performing an audio effect which can provide the same impression as the video effect can give, and then, music applied with the audio effect is output. Thus, in the embodiment, in a case that even either one of an audio effect or a video effect is selected, the other effect which can provide the same impression as one effect can give is performed in conjunction with either one of the effects. With this process, a user can perform with easy operations, in which videos and music can match without a discomfort impression. A video effect which can provide the same impression as an audio effect can give will be explained in details later.

In the GUI display area A2, an operation result of the user is reflected such that a selected selection candidate is highlighted. The GUI display area A2 is so configured that two selection candidates, an "audio effect" and a "video effect" are displayed in the first hierarchy, and a display selection candidate showing a type of each effect is displayed in a lower hierarchy. In other words, users having a specialized field in music such as DJs select the "audio effect" in the first hierarchy and users having a specialized field in videos select the "video effect" in the first hierarchy. Further, an effect process result (a visualized process result) to audio signals may be displayed on the edit result display area A1, in addition to a video after the effect process.

Also, edit operations which brings various edit processes into practice can be performed on the operation screen D besides effect processes. In this case, it may be possible to select a content of the edit process with an operator (not shown) (or as the highest hierarchy of the GUI display area A2). The operation area A3 displays edit operation display (display for performing an edit operation by the user) according to the selected process content. Contents of selectable edit processes include various processes such as a mixing process of a plurality of AV signals, an output signal switching process, and a level adjustment process which can be implemented by a general audio/video mixer, besides the effect process.

On the other hand, the knob 63 is configured to adjust a mixing rate of an original sound and the audio effect when the audio effect is selected on the GUI display area A2. For example, when the mixing rate is set to "0", the original sound is output at a rate of 100%, whereas an effect sound is output at a rate of 100% when the mixing rate is set to "Max". Further, the mixing rate is reflected to the video effect. Accordingly, the mixing rate of the original sound and the audio effect and the mixing rate of the original image and the video effect can be adjusted with the knob 63. When a video effect is selected on the GUI display area A2, the knob 63 is used for the adjustment of the mixing rate of the original image and the video effect and the mixing rate is also reflected to an audio effect. In other words, even if either one of the selection candidates, the "audio effect" and the "video effect", is selected, the adjusted mixing rate is reflected to both of them.

The operation button BT1 is a button used for setting whether audio signals are regarded as object for an edit process by using the operation screen D. Similarly, the operation button BT2 is a button used for setting whether video signals are regarded as object for an edit process by using the operation screen D. These operation buttons BT1 and BT2 are switched to object/non-object every time they are pressed. Therefore, in a case that an audio effect is selected and the operation button BT1 is set to the "non-object", only a video effect corresponding to the selected audio effect is performed. Also, in a case that a video effect is selected and the operation button BT2 is set to the "non-object", only an audio effect corresponding to the selected video effect is performed.

Further, the operation button BT3 is a button used for setting whether an edit result process is reflected to the output videos or not, and is switched to ON (reflect)/OFF (not-reflect) every time it is pressed. For example, in a case that the operation button BT3 is set to "ON", a video displayed on the edit result display area A1 and the output video correspond to each other at least in an edit result portion. On the other hand, when it is set to "OFF", the video displayed on the edit result display area A1 is not reflected to the output video at all.

For example, given that the operation button BT3 is set to "ON", as shown in FIG. 1B, in a case that signals of two channels are input and an effect process result of CH1 by using the operation area A3 is further mixed with the CH2 signals to output (for example, in a case that two screens are output on a same monitor, one of which being a screen based on the CH1 applied with an effect and the other being a screen based on the CH2), display of the edit result display area A1 corresponds to display of an output video, with regard to display of an effect process result of at least CH1. Consequently, even in the case that the effect process result of the CH1 is mixed with the CH2 signals, if an edit process for these two signals is performed on the operation area A3, display of the edit result display area A1 and the output video necessarily correspond to each other.

Other operators such as an arrow key and a joystick may be used as operators for adjusting a mixing rate of an effect, selecting an object/non-object of an edit process and selecting a reflect/not-reflect of an edit process result, without limited to the above knob and the operation buttons. It may be possible to display the knob 63 and the operation buttons BT1, BT2 and BT3 on the touch panel TP. Further, it may be possible to perform the adjustment of the mixing rate of an original sound and an audio effect and the adjustment of the mixing rate of an original image and a video effect (a function of the knob 63) on the operation area A3. In other words, a mixing rate can be designated as one of parameters of an effect.

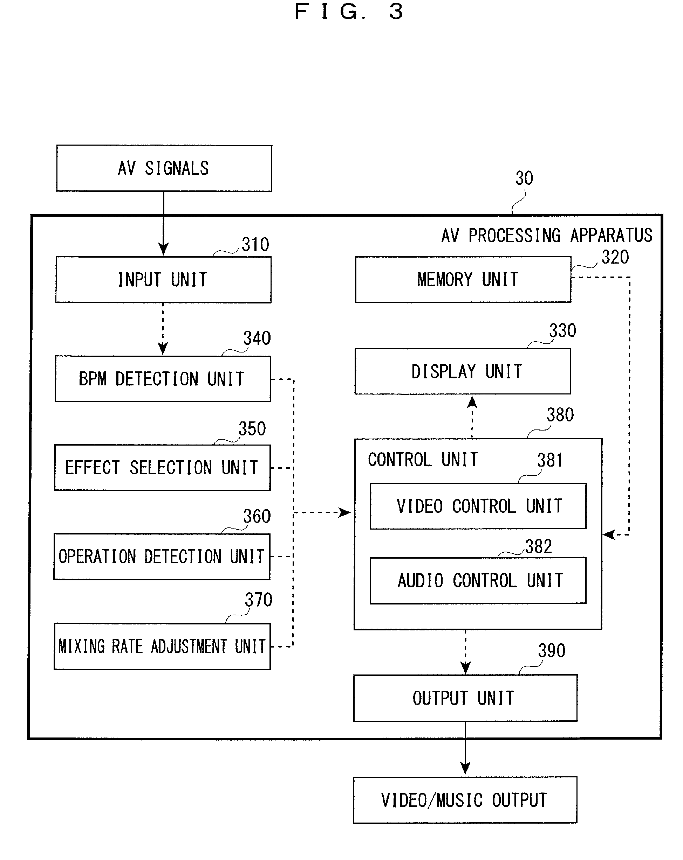

Referring to a block diagram shown in FIG. 3, a control structure of the AV processing apparatus 30 will be described. As described above, the AV processing apparatus 30 can perform a video effect by selecting an audio effect, which allows the user to feel the same impression as the audio effect can give, and can perform an audio effect by selecting a video effect, which allows the user to feel the same impression as the video effect can give. To avoid duplicate explanation, a case where a video effect is performed by selecting an audio effect is mainly explained hereinafter, thereby the user can feel the same impression as the audio effect can give.

As shown in FIG. 3, the AV processing apparatus 30 includes an input unit 310, a memory unit 320, a display unit 330, a BPM detection unit 340, an effect selection unit 350, an operation detection unit 360, a mixing rate adjustment unit 370, a control unit 380 and an output unit 390.

The input unit 310 is configured to input AV signals and is constructed by a signal input interface (such as a USB or a MIDI) (not shown) as a main element.

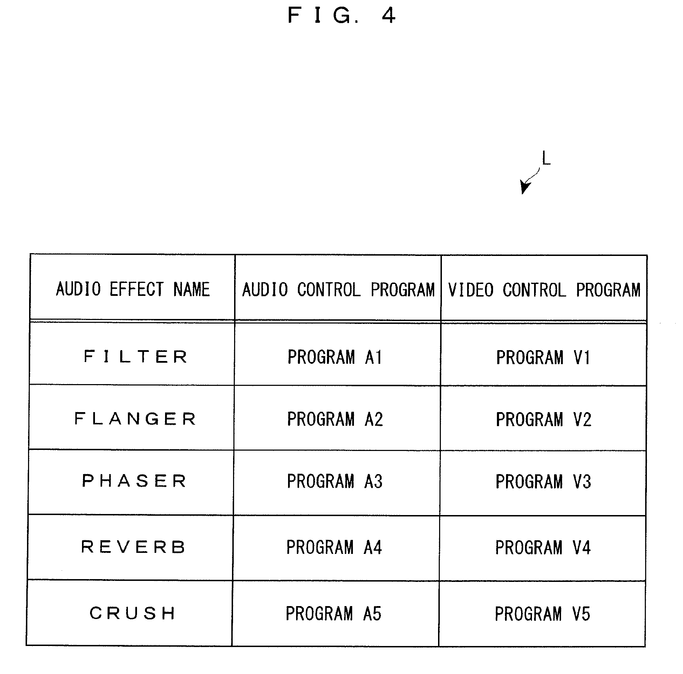

The memory unit 320 stores a plurality of video control programs for implementing a plurality types of video effects corresponding to the plurality types of audio effects to provide the same impression as each audio effect can give. The memory unit 320 also stores an audio control program of each audio effect. In other words, the memory unit 320 stores the control program (the audio control program) to correspond to the video control program per audio effect (see a program list shown in FIG. 4).

The display unit 330 is configured to display the operation screen D (the operation area A3) used for designating a parameter of an audio effect on the touch panel TP, and is constructed by the above mentioned display control unit 32 and the touch panel TP (see FIG. 1B) as main elements.

The BPM detection unit 340 is configured to detect a BPM value of an original sound applied with an audio effect and is constructed by a part of the above effect processing unit 33 (see FIG. 1B). In the control unit 380 described later, a BPM coefficient based on the BPM value detected by the BPM detection unit 340 is reflected, and a video effect and an audio effect are implemented, respectively.

The effect selection unit 350 is configured to select one or more audio effects from a plurality types of audio effects, and is constructed by the touch panel TP (the GUI display area A2) as a main element. In the GUI display area A2, "audio effect names" of a program list L stored in the memory unit 320 are displayed as selection candidates. The user selects one or more desired audio effects from a plurality of selection candidates displayed on the GUI display area A2.

The operation detection unit 360 is configured to detect an operation on the operation screen D, and is constructed by the touch panel TP as a main element. Especially, a parameter of the audio effect is detected based on an operation result on the operation area A3.

The mixing rate adjustment unit 370 is configured to adjust a mixing rate of an original sound and an audio effect, and is constructed by the knob 63 (see FIG. 2) as a main element.

The control unit 380 has a video control unit 381 and an audio control unit 382, and is constructed by the above CPU 31 and the effect processing unit 33 (see FIG. 1B) as main elements. The video control unit 381 performs a video effect which provides the same impression as the audio effect can give by reading out and implementing a video control program from the memory unit 320, the program corresponding to the selected audio effect. Further, the audio control unit 382 performs an audio effect by reading out and implementing the audio control program of the selected audio effect from the memory unit 320.

In this case, a time change coefficient of the corresponding audio effect is reflected to the video control program implemented by the video control unit 381. The "time change coefficient" is a numerical conversion coefficient in which a rate of the audio effect state changes progressively along with time is quantified. For example, in a case of an audio effect such as "echo" which applies a reverberant sound and the reverberant sound vanishes for ten seconds, a time change coefficient is such that a rate in which volume thereof becomes reduced is quantified. Accordingly, when the "echo" is selected as an audio effect, a video effect by which an incidental image vanishes for ten seconds is implemented.

Further, the audio control unit 382 implements an audio effect selected by the effect selection unit 350 by reflecting a BPM coefficient based on the BPM value detected by the BPM detection unit 340, an audio parameter corresponding to a detection position by the operation detection unit 360 and a mixing rate adjusted by the mixing rate adjustment unit 370. Further, the video control unit 381 reflects the BPM coefficient, a video parameter corresponding to the detection position by the operation detection unit 360 and the mixing rate, and performs a video effect which can provide the same impression as the audio effect selected by the effect selection unit 350 can give.

The output unit 390 is configured to output a video and music after an effect process, and is constructed by a signal output interface (such as a USB or a MIDI) (not shown) as a main element. In short, the output unit 390 outputs a video applied with a video effect implemented by the video control unit 381 to an original image based on input video signals, and outputs music applied with an audio effect implemented by the audio control unit 382 to an original sound based on input audio signals.

Referring to FIG. 4, the program list L stored in the memory unit 320 will be explained. As shown in FIG. 4, audio effect names, audio control programs and video control programs related to one another are stored in the program list L. For example, in a case of the audio effect name, the "filter" shown in the topmost stage in the program list L, a program A1 as an audio control program for implementing the "filter" and a program V1 as a video control program for implementing a video effect which can provide the same impression as the "filter" can give are related to each other.

Details of each program listed up in the program list L will be explained. The program A1 as an audio control program of the "filter" is a low pass filter of which cut-off frequencies are changed in conjunction with a BPM value of an original sound, and is configured to change the sound between the original sound and a fuzzy sound. The program V1 as a video control program of the "filter" is configured to apply a gradation effect in at least a part of an original image. Thus, the program V1 is configured to expresses the fuzzy sound by gradating the video and to change the video between the original image and the gradated image.

A program A2 as an audio control program of a "flanger" is configured to generate a flanger effect (sounds like a jet airplane) by adding a sound to which time shifts. By changing a frequency range applied with the flanger effect in accordance with a BPM value of the original sound, various musical expressions are performed. A program V2 as a video control program of the "flanger" is configured to apply an effect such that an arbitrary image is passing from the back to the front in at least a part of the original image. The effect is implemented by extracting to enlarge an object corresponding to at least a part of the original image or an edge portion of the overall original image and by feedbacking it. It is preferable that, in the video effect implemented by the program V2, parameters such as an enlargement rate and the like change in accordance with a BPM value of the original sound.

A program A3 as an audio control program of a "phaser" is configured to generate a phase effect by adding a sound to which phase shifts. Various musical expressions are achieved by changing a frequency range applied with the phase effect in accordance with a BPM value of the original sound. A program V3 as a video control program of the "phaser" is configured to synthesize an original image and a fedback image which is rotated according to a rate in conjunction with the BPM value of the original sound or the audio effect. In this case, it is preferable that the original image or the rotated fedback image having higher brightness be selected and synthesized according to the rate in conjunction with the BPM value. As a synthesized image is fedback to a feedback buffer and is mixed with the original image to be output according to the mixing rate adjusted with the knob 63 (see FIG. 2).

A program A4 as an audio control program of a "reverb" is configured to generate a reverberant sound. A program V4 as a video control program of the "reverb" is configured to store videos in a plurality of buffers, generates a reverberant impression by enlarging videos sequentially read out from the plurality of buffers. After mixing the enlarged image and the original image, the program 4 generates an incidental image impression by mixing the mixed image and videos read out from the plurality of buffers.

A program A5 as an audio control program of a "crush" is configured to generate a noise sound or a rough-edged sound, and achieve a sound having low-fidelity by digitally destroying an original sound. A program V5 as a video control program of the "crush" is configured to elongate pixels corresponding to a particular portion in opposite directions with the particular portion of a video as a center. It is preferable, for example, that the "particular portion" be a line segment which cuts a screen based on the original image in half lengthwise or crosswise. Thus, it is possible to express the impression by which the screen is sharply crushed by elongating in two opposite directions along the line segment dividing off the screen.

As described above, according to the embodiment, even users such as DJs who are not familiar with a video field can easily perform a video effect which can provide the same impression as an audio effect can give by selecting an audio effect having an image similar to an image of a desired video effect. Further, a selected audio effect can be performed in conjunction with a video effect by setting video signals and audio signals as edit objects (see operation buttons BT1 and BT2 in FIG. 2). Therefore, effects having the same image can be applied to videos and music by a simple operation in which an audio effect is only selected.

As the operation screen D used for designating a parameter of an audio effect is displayed on the touch panel TP, intuitive operations can be expected. Further, as a parameter reflected to both a video effect and an audio effect is determined based on an operation position (a detected position by the operation detection unit 360) on the operation screen D (the operation area A3), a user can designate the parameter by the operation position. In short, as the parameter can be changed by an easy operation in which the operation position is only moved, various video expressions and musical expressions can be achieved with an instantaneous judgment. Still further, as the control result of the video control unit 381 is displayed on the edit result display area A1, the user can surely confirm that the user's own operation has been reflected to the control result.

In the embodiment above, the case where the video effect which can provide the same impression as the audio effect can give by selecting the audio effect is performed is mainly explained. An operation where an audio effect which can provide the same impression as a video effect can give by selecting the video effect is performed will be briefly explained.

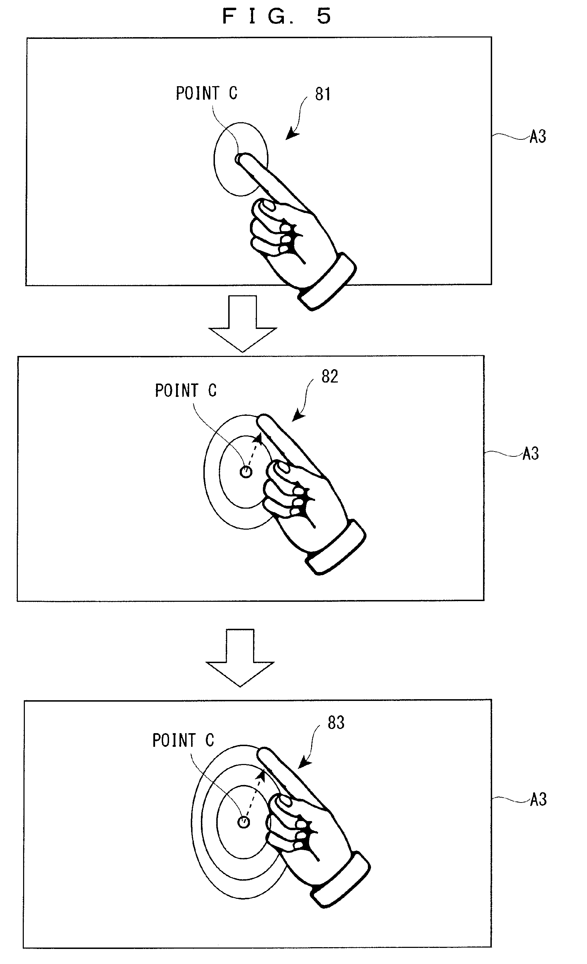

FIG. 5 shows an example of a method by which a parameter of a video effect is changed by an operation on the operation area A3. FIG. 5 shows a case where an original image (not shown) is displayed on the operation area A3, the original image is applied with a ripple effect as a video effect, and the parameter thereof is changed by moving a touch position from a point C in a direction of a dotted arrow. As the touch position moves, a state of a ripple shown by numeral 81 (a single ripple) is changed to a state shown by numeral 82 (a double ripple) and is finally changed to a state shown by numeral 83 (a triple ripple).

When the touch position is moved from the point C in the dotted arrow direction, the operation detection unit 360 detects the touch position per predetermined unit time and the video control unit 381 performs a video effect based on a parameter obtained by the detected position. More specifically, a ripple is controlled to enlarge as the touch position moves and to increase the number of ripples per predetermined movement amount. In this case, the control result of the video control unit 381 is reflected on the operation area A3 as shown in FIG. 5, in addition to the edit result display area A1. Further, the audio control unit 382 performs an audio effect based on the parameter obtained from the detection position of the operation detection unit 360 as same as the case of the video control unit 381, in conjunction with the video effect. More specifically, the audio effect is activated at the time of detection of touch-ON and a process such as an echo effect is applied in conjunction with enlargement of a ripple. The audio effect terminates at the time of detection of touch-OFF. In this case, it may be also possible to perform a process in which an addition rate of the echo effect to the audio signals increases in accordance with a speed of ripple enlargement.

According to this structure, as a parameter of a video effect can be operated on an original image to be applied with an effect, it is easily recognized what video effect can be obtained. Also, as the operation result is reflected on the operation screen D (the operation area A3), it is possible to generate a video effect in harmony with an image of the user. Further, as the operation is easy such that the touch position is moved (the ripple is enlarged), it is convenient when effective musical expressions and video expressions need to be achieved with an instantaneous judgment. With this structure, for example, in a case that the AV processing apparatus 30 is adapted to DVJ equipment, it is easy to operate music and videos regardless of specialized field such as DJ and VJ. Still further, as one person can operate music and videos, a time lag between them is avoided, enabling to achieve higher performance.

In the example above, it is preferable that the circle expressing the center point (point C) and the dotted arrow be reflected only on the operation area A3, not on the edit result display area A1 and the output videos. According to the structure, the enlargement of the ripple is clearly shown to the user, while visual quality of the output videos is not deteriorated.

In terms of the video effect for the ripple, it may be possible to enlarge the ripple based on a touch duration time. In this modified example, when the point C is touched, ripples continues to be generated (continues to be enlarged radially toward the outside the screen) from the point C as a center during the touch. When a finger takes off from the point C, the ripples are converged to the point C and are finally eliminated. In this case, the ripples may not be changed even if the touch position is moved.

The modified example of the video effect of the ripple may be adapted to an enlargement effect. For example, in a case that a predetermined object needs to be enlarged from the center point thereof, the object continues to be enlarged while the center position is being touched. When the finger is withdrawn from the center point, the object is reduced to its' original size. After the object is enlarged and when the touch position is moved, the object is moved by following up with the touch position while maintaining the enlarged size.

An enlargement/reduction, a puzzle, a coloring, a gradation, a strobe, a lens, a wipe, an inverse, a negative and the like may be adapted as video effect types.

Besides, each function (see FIG. 3) for selecting an audio effect may be adapted to a case where an audio effect which can provide the same impression as a video effect can give is performed by selecting the video effect. In other words, even when a video effect is selected, it is preferable that a time change coefficient of the corresponding video effect be reflected to an audio control program. Further, it is preferable that the display unit 330 display the operation screen D for designating a parameter of the video effect on the touch panel TP. Still further, it is preferable that the mixing rate adjustment unit 370 adjust a mixing rate of the original image and the video effect while the control unit 380 reflect the mixing rate to perform the audio effect and the video effect, respectively.

In the embodiment above, when effects in conjunction with both music and a video are applied, a designated identical parameter is reflected thereto. On the other hand, it may be possible to adjust a rate by operators separately how much parameter of the audio effect and the video effect is reflected. In this case, for example, it may be possible to adjust to apply the designated parameter at 100% for the video effect, and to adjust to apply the designated parameter at 50% for the audio effect.

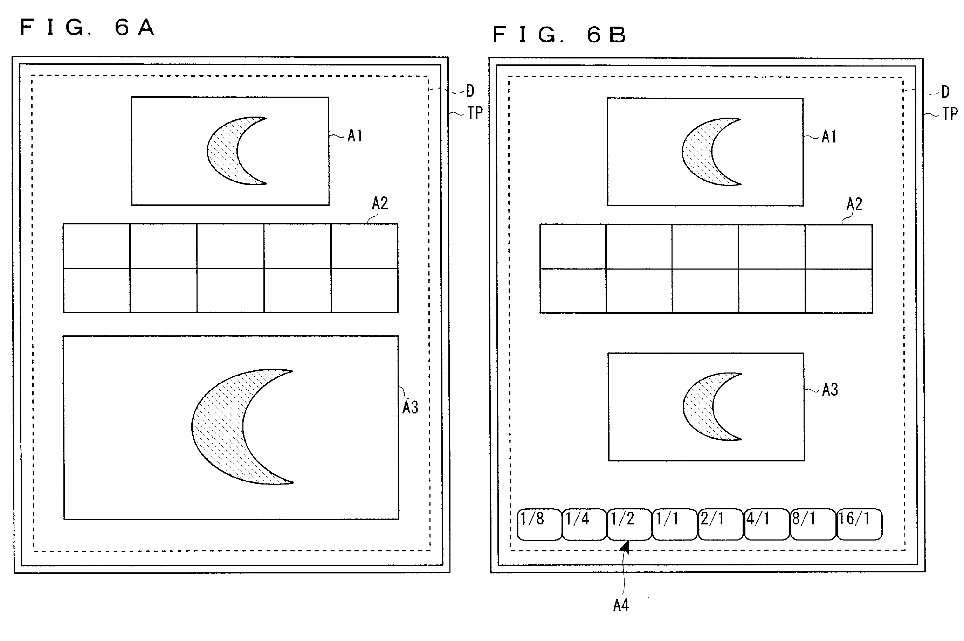

Further, in the above embodiment, cases such that an audio effect is performed with a video effect which is mainly controlled and a video effect is performed with an audio effect which is mainly controlled are explained. To distinguish them definitely, it may be possible to modify a specification of the operation screen D depending on which effect is controlled mainly. Differences of operation methods by mode will be briefly explained, referring to the former as a "touch effect mode" and the latter as a "beat effect mode". FIG. 6A shows one example of the operation screen D in the "touch effect mode" and FIG. 6B shows one example of the operation screen D in the "beat effect mode".

As shown in FIG. 6A, a screen for confirming an effect (a video approximately the same as a video displayed on the edit result display area A1) is displayed on the operation area A3 of the "touch effect mode". When the operation area A3 is touched, information such as a coordinate position and a touch duration time is acquired, and then, effects are applied to video signals and audio signals. At this point, in order to give the user an impression that the operation area A3 needs to be touched, tempts into touching, or is easy to touch, it is preferable that the operation area A3 be displayed larger than that of the "beat effect mode". Further, as the video effect is mainly controlled, it may be possible to deal the information such as the coordinate position and the touch duration time as the effect parameters of the video signals and to not collate the information to the audio signals. Further, in this case, only an ON/OFF judgment result whether the operation area A3 has been touched or not may be used as effect parameter for the audio signals.

In contrast, as shown in FIG. 6B, displaying a screen for confirming an effect on the operation area A3 in the "beat effect mode" is similar to that of the "touch effect mode", but the beat effect mode doffers from the touch effect mode in that a button group (a rhythm button group) A4 for setting a cycle of an effect is provided. By having the button group, and in order to clearly show a difference from the "touch effect mode" to the user, the operation area A3 is displayed smaller. In the "beat effect mode", as the user operates with audio signals mainly, the audio effect is not operated by a touch on the operation area A3. Instead, a cycle control of the audio effect is performed by an operation with the button group A4. For example, in a case of BPM 120 (music with two beats per second), when a "1/1" button of the button group A4 is touched, an effect is applied to at least one of the video signals and the audio signals with two cycles per second. Similarly, when a "1/4" button is touched, an effect is applied with eight cycles per second, and when a "2/1" button is touched, an effect is applied with one cycle per second. The operation area A3 is used for operating the video signals. When the operation area A3 is touched, ON/OFF information of a video effect is shown instead of information such as the coordinate position and the touch duration time. By causing the operation area A3 to function as, so-called, a toggle button, the video effect is turned on once the operation area A3 is touched, and the video effect is turned off when it is touched again. In this case, when the video effect is turned on, a simple video effect (such as a negative-positive conversion, a color change, an edge extract and a binarization) is applied to only the video signals. Thus, in the "beat effect mode", the button group A4 is provided. As a cycle change is made dynamically by touching the button group directly, performability is enhanced.

Further, the AV processing apparatus 30 is exemplified as DVJ equipment used in a club and the like, but the invention can be applied to apparatuses and programs (such as an audio/video effecter, an audio/video mixer, an audio/video controller, an audio/video processing application) which can apply effects to AV signals other than the DVJ equipment. In other words, the invention can be applied to apparatuses which process only audio signals or only video signals, as well as apparatuses which process both audio signals and video signals.

Further, each unit and function included in the AV processing apparatus 30 shown in the example above can be provided as a program. The program can also be stored and provided in a recording medium (not shown). Examples of such recording medium include: a CD-ROM, a flash ROM, a memory card (a compact flash (trade mark), smart media, a memory stick and the like), a compact disc, a magnetooptical disc, a digital versatile disc, a flexible disc, and a hard disc.

The system configuration of the AV processing system SY, the unit configuration, processing steps and the like of the AV processing apparatus 30 may not be limited to the above-described embodiment, but may be modified suitably within the spirit and scope of the present invention.

## Claims

1. An effect apparatus comprising:
a memory unit that stores a plurality of video control programs for performing a plurality types of video effects which can provide a same impression as each audio effect can give in correspondence to a plurality types of audio effects;
an effect selection unit that selects one or more audio effects from the plurality types of audio effects; and
a video control unit that performs the video effect which can provide the same impression as the audio effect can give by implementing the video control program corresponding to a selected audio effect.

2. The effect apparatus according to claim 1, wherein the video control program is reflected with a time change coefficient of the corresponding audio effect.

3. The effect apparatus according to claim 1, wherein the memory unit stores a plurality of audio control programs that perform the plurality types of audio effects, and the apparatus further has an audio control unit that performs an audio effect by implementing the audio control program of the selected audio effect in conjunction with the video control program implemented by the video control unit.

4. The effect apparatus according to claim 3 further comprising: a display unit that displays an operation screen used for designating a parameter of the audio effect on a touch panel having a display function; and an operation detection unit that detects an operation on the touch panel having the display function, wherein the video control unit and the audio control unit reflect the parameter corresponding to a detected position by the operation detection unit to perform the video effect and the audio effect, respectively, and a control result of the video control unit is reflected to the display unit.

5. The effect apparatus according to claim 3, wherein the audio effect is applied to an original sound and the video effect is applied to an original image, the apparatus further has a mixing rate adjustment unit that adjusts a mixing rate of the original sound and the audio effect, and the video control unit and the audio control unit reflect the mixing rate to perform the video effect and the audio effect, respectively.

6. The effect apparatus according to claim 3, further comprising a BPM detection unit that detects a BPM value of an original sound applied with the audio effect, wherein the video control unit and the audio control unit reflect a BPM coefficient based on the BPM value detected by the BPM detection unit to perform the video effect and the audio effect, respectively.

7. The effect apparatus according to claim 1, wherein a type of the audio effect includes a "filter", and the video control program corresponding to the "filter" applies a gradation effect in at least a part of an original image.

8. The effect apparatus according to claim 1, wherein a type of the audio effect includes a "flanger", and the video control program corresponding to the "flanger" applies an effect such that an arbitrary image is passing from a back to a front in at least a part of an original image.

9. The effect apparatus according to claim 1, wherein a type of the audio effect includes a "phaser", and the video control program corresponding to the "phaser" synthesizes an original image and an image of a fedback image which is rotated according to a rate in conjunction with a BPM value of the audio effect.

10. The effect apparatus according to claim 1, wherein a type of the audio effect includes a "reverb", the video control program corresponding to the "reverb" stores a video in a plurality of buffers, generates a reverberant impression by enlarging the video sequentially read out from the plurality of buffers, and after mixing an enlarged image and an original image, an mixed image and the video read out from the plurality of buffers are mixed, thereby an incidental image impression is generated.

11. The effect apparatus according to claim 1, wherein a type of the audio effect includes a "crush", and the video control program corresponding to the "crush" elongates a pixel corresponding to a particular portion in opposite directions with the particular portion of video as a center.

12. An effect apparatus comprising:
a memory unit that stores a plurality of audio control programs for performing a plurality types of audio effects which can provide a same impression as each video effect can give in correspondence to a plurality types of video effects,
an effect selection unit that selects one or more video effects from the plurality types of video effects, and
an audio control unit that performs the audio effect which can provide the same impression as the video effect can give by implementing the audio control program corresponding to a selected video effect.

13. An AV apparatus processing apparatus comprising:
each unit of the effect apparatus as set forth in claim 1;
an input unit used for inputting the video signal; and
an output unit that outputs a video applied with the video effect implemented by the video control unit to an original image based on an input video signal.

14. An AV apparatus processing apparatus comprising:
each unit of the effect apparatus as set forth in claim 12;
an input unit used for inputting the audio signal; and
an output unit that outputs music applied with the audio effect implemented by the audio control unit to an original sound based on an input audio signal.

15. A program causing a computer to function as each unit of the effect apparatus according to claim 1 or 12.
